Europäisches Patentamt

European Patent Office

Office européen des brevets

(11) Numéro de publication: **0 280 826**

**A1**

(12) **DEMANDE DE BREVET EUROPEEN**

(21) Numéro de dépôt: **87402835.0**

(51) Int. Cl.4: **C01B 6/06**

(22) Date de dépôt: **14.12.87**

(30) Priorité: **28.01.87 FR 8700987**

(43) Date de publication de la demande:
**07.09.88 Bulletin 88/36**

(84) Etats contractants désignés:
**BE CH DE ES FR GB GR IT LI LU NL SE**

(71) Demandeur: **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07(FR)**

(72) Inventeur: **Piffard, Jean-François**
**3, rue du Docteur Emile Roux**
**F-92150 Suresnes(FR)**
Inventeur: **Rade, Jean-Yves**
**23, avenue Charles de Gaulle Collège C. Péguy**
**F-78150 Le Chesnay(FR)**

(74) Mandataire: **Bouton Neuvy, Liliane et al**
**L'Air liquide, Société Anonyme pour L'Etude et L'Exploitation des Procédés Georges Claude 75, Quai d'Orsay**
**F-75321 Paris Cédex 07(FR)**

(54) **Procédé de synthèse de l'arsine par réduction de l'anhydride arsénieux.**

(57) L'invention concerne la synthèse de l'arsine par réduction de l'anhydride arsénieux par l'hydrogène naissant, généré par addition de poudre de zinc dans une solution acide.

Selon le procédé, la dissolution de l'anhydride arsénieux est effectuée en milieu basique ; la préparation du milieu réactionnel est ensuite réalisée par acidification de la solution précédemment obtenue ; puis la poudre de zinc est introduite de manière contrôlée, sous agitation dans le milieu réactionnel.

Application du produit synthétisé dans l'industrie des semiconducteurs.

EP 0 280 826 A1

## "PROCEDE DE SYNTHESE DE L'ARSINE PAR REDUCTION DE L'ANHYDRIDE ARSENIEUX"

La présente invention a pour objet un procédé de synthèse de l'arsine par réduction de l'anhydride arsénieux.

L'arsine est et tend à devenir un produit de plus en plus important pour l'industrie des semi-conducteurs. Aussi, il est critique de disposer de vecteurs gazeux à arsenic pour répondre aux besoins des électroniciens en ce qui concerne l'épitaxie pour les dépôts d'arséniure de gallium, ou le dopage.

On a recherché un procédé ayant pour principe la transformation d'arsenic en hydrure par l'intermédiaire d'hydrogène naissant H° produit par réductions des ions H$^+$, à partir d'une matière première bon marché et facilement disponible.

Ce procédé consiste en une réduction par l'hydrogène naissant, généré par addition de poudre de zinc dans une solution acide contenant l'anhydride arsénieux dissous.

La génération d'arsine est obtenue selon un processus de réduction mettant en oeuvre une solution acide source d'ions H$^+$, type acide sulfurique ou chlorhydrique ; de la poudre de zinc dont le rôle est de réduire l'ion H$^+$ et qui est libéré à l'état H° naissant, au sein de la solution acide ; un composé arsénié qui est de l'arsénite de sodium AsO$_2$Na préparé à partir du composé As$_2$O$_3$ trioxyde d'arsenic ou anhydride arsénieux.

Selon l'invention, la dissolution de l'anhydride arsénieux s'effectue en milieu basique tel que l'hydroxyde de sodium et donne lieu à la formation de l'arsénite de sodium, As$_2$O$_3$ + 2NaOH → 2NaAsO$_2$ + H$_2$O.

Ensuite la préparation du milieu réactionnel est réalisée par acidification de la solution obtenue. Puis la réduction est obtenue par introduction contrôlée de poudre de zinc, sous agitation dans le milieu réactionnel 2AsO$_2$Na + 6Zn + 7H$_2$SO$_4$ → 2AsH$_3$ + Na$_2$SO$_4$ + 6ZnSO$_4$ + H$_2$O.

On obtient un gaz contenant ~ 50% d'arsine - 50 % d'hydrogène. Le procédé permet d'atteindre, avec une bonne reproductibilité, un taux de transformation de l'anhydride arsénieux en arsine élevé.

Il a été constaté que le type d'acide mis en oeuvre, le volume de la solution d'acide, la granulométrie de la poudre de zinc et la température du milieu réactionnel constituent des facteurs importants vis à vis du taux de transformation de l'arsenic. Ainsi il a été observé, que ce taux croît en fonction des excès d'acide et de zinc, et qu'il n'y a pas d'influence déterminante de la température entre 20 et 40°C, bien qu'il ait été trouvé intéressant de générer l'hydrogène naissant entre 20 et 25°C. Quand la température est supérieure à 40°C, il y a apparition de difficultés technologiques.

L'emploi de l'acide sulfurique a été préféré à celui de l'acide chlorhydrique qui entraine la présence de mousses très abondantes qui gênent considérablement la réaction, provoque la formation sur les parois du réacteur d'un dépôt métallique noir d'arsenic, très important, et soulève le risque potentiel de créer des chlorures d'arsenic, du type AsCl$_3$, très gènants pour les applications de l'arsine. L'acide sulfurique de normalité comprise entre 2,5 à 3,5N conduit à de très bons résultats, car au-dessus de cette normalité l'anhydride arsénieux dissous précipite dans la solution acide.

Un excès d'acide a une influence favorable sur le taux de transformation en arsine, et un excès d'au moins 50 % a été constaté comme très satisfaisant.

De même, un excès de zinc a une influence favorable sur le rendement réactionnel, et à partir de 40 % l'influence est très sensible ; dans les conditions stoechiométriques on observe une forte chute du taux de transformation.

La granulométrie de la poudre de zinc a une influence déterminante sur le rendement réactionnel. Il a été trouvé que des résultats satisfaisants ne sont obtenus qu'à partir de granulométrie inférieure à 0,2 millimètre.

La solution d'arsénite de sodium est préparée par dissolution de l'anhydride arsénieux sous forme de poudre dans l'hydroxyde de sodium, puis la solution est conservée à l'abri de la lumière. Pour obtenir une bonne dissolution il est nécessaire d'agiter, et éventuellement de chauffer à environ 40°C.

Afin de préparer la solution réactionnelle d'arsénite acide, on introduit dans le réacteur la quantité d'acide sulfurique fixée pour l'opération. Après une agitation de 2 à 3 minutes, on introduit la solution d'arsénite sodique préalablement préparée, tout en régulant la température. La poudre de zinc est introduite progressivement de manière contrôlée, la température du milieu étant maintenue à la valeur fixée.

L'arsine ou l'hydrogène arsénié étant un des gaz les plus toxiques, le procédé est mis en oeuvre des conditions particulières de sécurité, selon lesquelles aucune mise à l'air n'est admise, toute l'arsine doit être confinée dans l'installation. En outre, les effluents gazeux et liquides doivent être traités de manière à éviter toute pollution.

Il est donné ci-après des exemples qui illustrent l'invention à titre non limitatif.

Les différents essais ont été réalisés dans un appareillage permettant la mise sous vide et l'inertage sous gaz neutre, tel que l'azote, constitué par un réacteur en verre, par exemple de type cylindrique, munie d'une agitation par barreau magnétique. Le couvercle de ce réacteur comporte diverses tubulures prévues pour l'introduction de la poudre de zinc, l'introduction de la solution de détoxication par neutralisation des résidus de fabrication, la sortie des gaz synthétisés, la mise sous vide, l'inertage et la prise de température, et pour le système de sécurité.

L'appareillage comporte une trémie doseuse pour l'introduction de la poudre de zinc, branchée sur le réacteur, permettant la mise sous vide et l'inertage par un gaz neutre.

L'appareillage comporte également un réfrigérant monté directement sur la tubulure de sortie des effluents gazeux, des pièges d'épuration ainsi que des réceptables cryopiégés dans l'azote liquide pour la réception des gaz qui sont contrôlés par analyse chromatographique.

La solution d'acide est versée dans le réacteur, agitée pour favoriser le dégazage, puis est additionnée par la solution d'arsénite de sodium. Le réacteur est ensuite inerté, les pièges sont mis en froid dans l'azote liquide, ainsi que les bouteilles réceptrices. Les pressions de la trémie et du réacteur sont équilibrées et la trémie est mise en communication avec le réacteur contenant la solution d'arsénite acide agitée. Durant la production les gaz incondensables et les gaz de purge sont stockés avant détoxication, afin de travailler avec un maximum de sécurité. Après la fin de l'introduction de la poudre de zinc on attend 1h à 1h30 que la réaction soit pratiquement arrêtée. Une fois la réaction considérée comme terminée, on récupère les gaz de production dans une bouteille réceptrice, on détoxifie le milieu réactionnel et évacue les résidus.

Suivant le plan d'expérience, on a étudié l'influence de divers paramètres : dont la nature de l'acide, l'excès en acide, l'excès en poudre de zinc, la granulométrie de la dite poudre, la température, sur le rendement représenté par l'arsine produit par rapport à l'anhydride arsénieux de départ

| Essai | $NaAsO_2$ | $As_2O_3$ | | Acide | | $T$ °C | Zinc | | | $R^t$ |
|---|---|---|---|---|---|---|---|---|---|---|
| | g/1 | g/1 | 2,5N | Volume en litres | % en excès | de réaction | Granul. en mm. | Poids en g. | % en excès | $AsH_3/As_2O_3$ |
| 1 | 33 | 25,1 | $H_2SO_4$ | 1 | 18 | 20 | 0,4/0,8 | 70 | 40 | 6,6 |
| 2 | 33 | 25,1 | $H_2SO_4$ | 1,5 | 88 | 40 | 0,4/0,8 | 70 | 40 | 15 |
| 3 | 33 | 25,1 | HCl | 1,5 | 88 | 20 | 0,4/0,8 | 70 | 40 | 60,6 |
| 4 | 33 | 25,1 | HCl | 1 | 18 | 20 | < 0,2 | 70 | 40 | 35,3 |
| 5 | 33 | 25,1 | HCl | 1,5 | 88 | 40 | < 0,2 | 70 | 40 | 34,8 |
| 6 | 33 | 25,1 | HCl | 1,5 | 88 | 20 | < 0,2 | 70 | 40 | 59 |
| 7 | 33 | 25,1 | $H_2SO_4$ | 1,5 | 88 | 20 | < 0,2 | 70 | 40 | 83,3 |
| 8 | 43,34 | 33 | $H_2SO_4$ | 1,5 | 50 | 20 | < 0,2 | 122,5 | 75 | 92 |
| 9 | 43,34 | 33 | $H_2SO_4$ | 1,5 | 50 | 20 | < 0,2 | 70 | 00 | 57,7 |

De la lecture des résultats consignés dans ce tableau, il apparait qu'une fabrication optimale d'arsine à partir d'anhydride arsénieux soit obtenue en traitant la solution d'arsénite de sodium par de l'acide

3

sulfurique 2,5 N, en excés, puis en introduisant de la poudre de zinc de granulométrie inférieure à 0,2 millimètre, en excès, la température de réaction étant d'environ 20°C.

## Revendications

1. Procédé de synthèse de l'arsine par réduction de l'anhydride arsénieux par l'hydrogène naissant, généré par de la poudre de zinc d'une solution acide, caractérisé en ce que la dissolution de l'anhydride arsénieux est effectuée en milieu basique ; la préparation du milieu réactionnel est ensuite réalisée par acidification de la solution précédemment obtenue ; puis la poudre de zinc de manière contrôlée est introduite sous agitation dans le milieu réactionnel acide.

2. Procédé de synthèse de l'arsine par réduction de l'anhydride arsénieux selon la revendication 1, caractérisé en ce que la dissolution de l'anhydride arsénieux s'effectue en présence d'hydroxyde de sodium.

3. Procédé de synthèse de l'arsine par réduction de l'anhydride arsénieux selon la revendication 1 ou 2, caractérisé en ce que l'acide utilisé dans la préparation du milieu réactionnel est de l'acide sulfurique de normalité comprise entre 2,5 et 3,5N.

4. Procédé de synthèse de l'arsine par réduction de l'anhydride arsénieux selon la revendication 3, caractérisé en ce que l'acide sulfurique est mis en oeuvre avec un excès d'au moins 50 %.

5. Procédé de synthèse de l'arsine par réduction de l'anhydride arsénieux selon une quelconque des revendications 1 à 4, caractérisé en ce que la granulométrie de la poudre de zinc introduite dans le milieu réactionnel est inférieure à 0,1 millimètre.

6. Procédé de synthèse de l'arsine par réduction de l'anhydride arsénieux selon la revendication 5, caractérisé en ce que la poudre de zinc est mise en oeuvre avec un excès d'au moins 40 %.

7. Procédé de synthèse de l'arsine par réduction de l'anhydride arsénieux selon une quelconque des revendications 1 à 5, caractérisé en ce que la réduction du milieu réactionnel acide est réalisée à la température comprise entre 20 et 25°C.

8. Procédé de synthèse de l'arsine par réduction de l'anhydride arsénieux, par l'hydrogène naissant généré par de la poudre de zinc d'une solution acide, caractérisé en ce que la dissolution de l'anhydride arsénieux est effectuée en solution sodique ; la préparation du milieu réactionnel est réalisée par acidification de la solution d'arsénite de sodium obtenue précédemment par de l'acide sulfurique 2,5N, en excès d'au moins 50 %; puis la réduction est obtenue par introduction contrôlée de poudre de zinc de granulométrie inférieure à 0,2 millimètre, en excès d'au moins 40 %; la température du milieu réactionnel étant d'environ 20°C.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | CHEMICAL ABSTRACTS, vol. 96, no. 12, mars 1982, page 147, résumé no. 87968a, Columbus, Ohio, US; CS-B-190 113 (P. TESARIK et al.) 15-09-1981 ----- | | C 01 B 6/06 |

DOMAINES TECHNIQUES RECHERCHES (Int. Cl.4)

C 01 B

Le présent rapport a été établi pour toutes les revendications

| Lieu de la recherche | Date d'achèvement de la recherche | Examinateur |
|---|---|---|
| LA HAYE | 02-05-1988 | VAN BELLINGEN I.C.A. |